# EUROPEAN PATENT APPLICATION

(11) **EP 4 395 202 A1**
(43) Date of publication of application: **03.07.2024**
(21) Application number: 22217387.4
(22) Date of filing: 30.12.2022
(51) Int. Cl.: H04B 7/155, H04L 45/00, H04W 84/18, H04W 52/02

(54) **COMMUNICATION METHOD FOR A WIRELESS AD HOC NETWORK, AND WIRELESS AD HOC NETWORK**

(71) Applicant: Rohde & Schwarz GmbH & Co. KG, 81671 München (DE)
(72) Inventor: Baessler, Andreas, 81671 München (DE)
(74) Representative: Prinz & Partner mbB

(57) **Abstract**

A communication method for a wireless ad hoc network (10), wherein the wireless ad hoc network (10) comprises a plurality of nodes (12). The wireless ad hoc network (10) is a time-slotted barrage relay network, wherein each node (12) comprises an RX module (32) being configured to receive data packages based on time division multiple access (TDMA) frames. Each node comprises a TX module (36) being configured to transmit data packages based on TDMA frames. The TDMA frames comprise time slots that are unambiguously assigned to one of the nodes (12), respectively. The communication method comprises the following steps:
- transmitting, by means of at least one node (12) of the plurality of nodes (12), at least one data package in a subset of time slots of a TDMA frame, respectively, wherein the subset of time slots is assigned to a subset of nodes (12) of the plurality of nodes (12); and
- deactivating, by means of the at least one node (12), the RX module (32) and/or the TX module (36) of the at least one node (12) during the subset of time slots of subsequent TDMA frames.

Further, a wireless ad hoc network (10) is described.

## Description

The invention generally relates to a communication method for a wireless ad hoc network. The invention further relates to a wireless ad hoc network.

In the state of the art, mobile or rather wireless networks such as mobile ad hoc networks (MANET) are known that comprise several nodes that communicate with each other. These networks typically comprise several nodes or rather participants that communicate with each other in order to exchange data packets. The data packets are exchanged between the nodes that all have a dedicated address. This ensures that the communication among these nodes is structured since each node has its own address. However, the addressing is complicated since mobile ad-hoc networks are dynamic in nature, which means that the nodes will enter or leave the network randomly so that (re-)addressing of the nodes is required.

In a plurality of applications of such MANETs, the individual nodes are battery-powered electronic devices. Accordingly, it is desirable to reduce the energy required to maintain the communication between the nodes of the MANET.

Thus, the object of the present invention is to provide a communication method for a wireless ad hoc network, as well as a wireless ad hoc network that are more energy-efficient.

According to the present invention, the problem is solved by a communication method for a wireless ad hoc network. The wireless ad hoc network comprises a plurality of nodes. The wireless ad hoc network is a time-slotted barrage relay network, wherein each node comprises an RX module being configured to receive data packages based on time division multiple access (TDMA) frames. Each node comprises a TX module being configured to transmit data packages based on TDMA frames. The TDMA frames comprise time slots that are unambiguously assigned to one of the nodes, respectively. The communication method comprises the following steps:
- transmitting, by means of at least one node of the plurality of nodes, at least one data package in a subset of time slots of a TDMA frame, respectively, wherein the subset of time slots is assigned to a subset of nodes of the plurality of nodes; and
- deactivating, by means of the at least one node, the RX module and/or the TX module of the at least one node during the subset of time slots of subsequent TDMA frames.

Therein and in the following, the term "subset of nodes" is understood to denote one node of the plurality of nodes, two or more nodes of the plurality of nodes, or all nodes of the plurality of nodes.

Likewise, the term "subset of time slots" is understood to denote one time slot of the respective TDMA frame, two or more time slots of the respective TDMA frame, or all time slots of the respective TDMA frame.

In general, the plurality of nodes exchange signals periodically, namely in cycles having a predetermined number of TDMA frames.

In the course of each cycle, the at least one node has to receive and/or transmit the at least one data package during each time slot only once. Accordingly, the RX module and/or the TX module can be deactivated in time slots in which the at least one data package has already been transmitted by the at least one node for the remaining cycle without risking data loss, as no transmission takes place in these time slots during the remaining cycle.

Thus, the time during which the RX module and/or the TX module of the at least one node, particularly of all nodes, has to be powered within each cycle is reduced significantly, thereby enhancing the energy-efficiency of the wireless ad hoc network.

The nodes may comprise at least one antenna, respectively, wherein the at least one antenna is coupled with the RX module and the TX module for receiving and transmitting data packages, respectively.

Of course, the nodes may each comprise at least one dedicated RX antenna being coupled with the RX module for receiving data packages, and/or at least one dedicated TX antenna being coupled with the TX module for transmitting data packages.

According to an aspect of the present invention, management data is provided and processed in the time slots assigned to the subset of nodes, respectively, wherein the management data comprises a remaining hop count portion. The remaining hop count portion comprises information on a remaining hop count for the management data associated with the respective node, wherein a value of the remaining hop count is decreased at each hop by means of the respective node. More precisely, the value of the remaining hop count is decreased by one at each hop. If the remaining hop count reaches a predefined value, particularly zero, the respective package is not forwarded to any further nodes. The remaining hop count can be transmitted efficiently, as the corresponding sequence of the transmitted data package usually only has to be a few bits long, e.g. 2, 3, or 4 bits.

The management data may comprise further information that is relevant for configuring the wireless ad hoc network.

According to another aspect of the present invention, the RX module and/or the TX module are reactivated for the subset of time slots after a number of TDMA frames corresponding to the remaining hop count have elapsed. Therein, the current TDMA frame is taken into account, i.e. the RX module and/or the TX module are reactivated for the subset of time slots after a number of subsequent TDMA frames corresponding to the remaining hop count minus 1 have elapsed. In other words, the RX module and/or the TX module are reactivated during the next cycle of frames, thereby ensuring that no data is lost within the wireless ad hoc network.

A further aspect of the present invention provides that the subset of nodes comprises the at least one node and/or nodes being arranged upstream of the at least one node. Therein and in the following, the term "nodes being arranged upstream" is understood to denote nodes from which the at least one node has received at least one data package.

Accordingly, the RX module and/or the TX module are deactivated during time slots that are assigned to certain nodes, namely nodes whose data packages have already been forwarded by the at least one node.

In a further embodiment of the present invention, management data is provided and processed in the time slots assigned to the subset of nodes, respectively, wherein the management data comprises configuration information and/or location information associated with the respective node. In fact, the data packages transmitted by the plurality of nodes within the time slots assigned to the subset of nodes comprise the management data.

The configuration information and/or the location information associated with the respective node may be transmitted together with the remaining hop count portion described above.

According to another aspect of the present invention, the at least one node transmits data packages received from different other nodes during a single TDMA frames in the subsequent TDMA frame. This way, data packages received from different nodes can be forwarded efficiently during the subsequent TDMA frame.

For example, the at least one node may receive a first data package from a first node during a first time slot of a TDMA frame and a second data package from a second node during a second time slot of the TDMA frame. In the next TDMA frame, the at least one node may forward the first data package during the first time slot and the second data package during the second time slot.

The TDMA frames may comprise data transmission time slots for transmitting payload data, respectively. In general, the payload data corresponds to data to be exchanged between the nodes other than the management data mentioned above. In other words, the payload data relates to content-related data rather than to data used for configuring the wireless ad hoc network.

Particularly, the payload data corresponds to image data, video data, audio data, and/or language data. However, it is to be understood that the payload data may be any other type of data to be exchanged between the plurality of nodes of the wireless ad hoc network.

According to the present invention, the problem further is solved by a wireless ad hoc network. The wireless ad hoc network comprises a plurality of nodes, wherein the wireless ad hoc network is a time-slotted barrage relay network. Each node comprises an RX module being configured to receive data packages being based on time division multiple access (TDMA) frames. Each node comprises a TX module being configured to transmit data packages being based on TDMA frames. The TDMA frames comprise time slots that are unambiguously assigned to one of the nodes, respectively. The wireless ad hoc network is configured to perform the communication method described above.

Regarding the further advantages and properties of the wireless ad hoc network, reference is made to the explanations given above with respect to the communication method, which also hold for the wireless ad hoc network and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a wireless ad hoc network according to the present invention;
- Figure 2 schematically shows a node of the wireless ad hoc network of Figure 1 in more detail;
- Figure 3 shows a flow chart of a communication method according to the present invention;
- Figure 4 schematically shows the general structure of frames transmitted by nodes of the wireless ad hoc network of Figure 1;
- Figure 5 schematically shows a configuration of a first node and of a second node after a first package has been transmitted initially;
- Figure 6 shows a configuration of the first node and of the second node after the data package has been forwarded; and
- Figure 7 schematically shows the structure of data packages transmitted by the nodes of the wireless ad hoc network of Figure 1.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

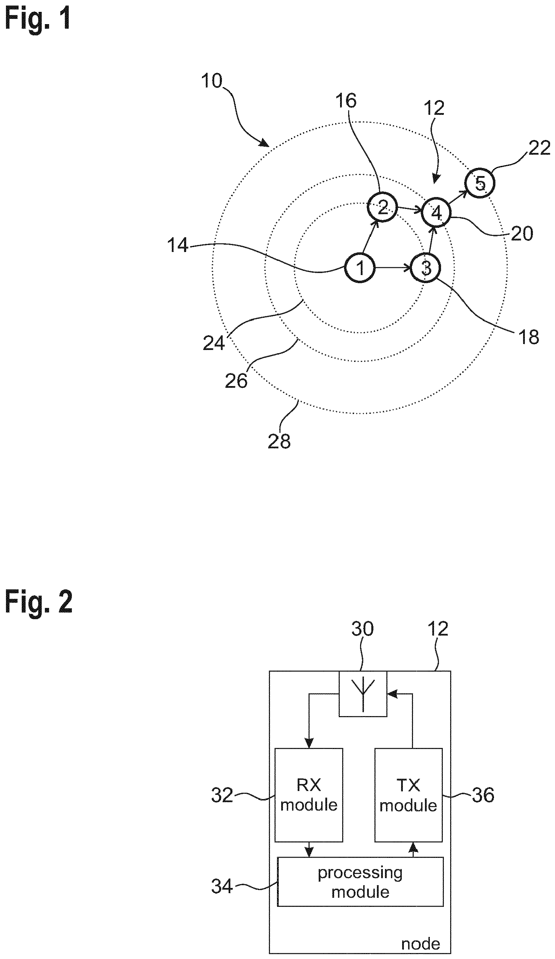

Figure 1 schematically shows a wireless ad hoc network 10 comprising a plurality of nodes 12, wherein the wireless ad hoc network 10 is established as a time-slotted barrage relay network.

In general, the nodes 12 are configured to communicate with each other by means of a wireless communication technique, namely by means of a time-division multiple access (TDMA) technique.

The individual nodes 12 may be established as any electronic device being capable of TDMA communication, respectively.

For example, the nodes 12 may be established as a smart phone, as a handheld radio, as a stationary radio, as a laptop, as a desktop computer, or as any other suitable type of smart device, respectively.

In Figure 1, the wireless ad hoc network 10 is shown from the viewpoint of a first node 14 of the plurality of nodes 12. It is to be understood that this is for illustration purposes only, i.e. the wireless ad hoc network 10 may likewise be described from the viewpoint of any other node 12.

In the exemplary embodiment shown in Figure 1, the first node 14 comprises two 1-hop neighbors, namely a second node 16 and a third node 18.

The first node 14 further comprises one 2-hop neighbor, namely a fourth node 20, and one 3-hop neighbor, namely a fifth node 22.

It is to be understood that the first node 14 may comprise an arbitrary number of 1-hop neighbors 24, 2-hop neighbors 26, 3-hop neighbors 28, etc., as is indicated by the dotted circles in Figure 1.

Figure 2 schematically shows one of the nodes 12 in more detail.

The node 12 comprises at least one antenna 30 that is configured to receive wireless radio frequency (RF) signals transmitted by the other nodes 12.

The node 12 further comprises an RX module 32 that is coupled with the at least one antenna 30 so as to receive the RF signals received by the at least one antenna 30.

The RX module 32 may be configured to down-convert the received RF signals to an intermediate frequency suitable for processing by means of a processing module 34 that is provided downstream of the RX module 32.

The processing module 34 is configured to process data packages comprised in the RF signals received from the other nodes 12.

Further, the processing module 34 is configured to generate data packages to be transmitted to the other nodes 12 via a TX module 36.

The TX module 36 is provided downstream of the processing module 34.

The TX module 36 is configured to up-convert signals received from the processing module 34 to an RF signal that can be transmitted by means of the at least one antenna 30, wherein the signals received from the processing module 34 comprise the data packages to be transmitted.

It is noted that the node 12 may each comprise at least one dedicated RX antenna being coupled with the RX module 32 for receiving data packages, and/or at least one dedicated TX antenna being coupled with the TX module 36 for transmitting data packages.

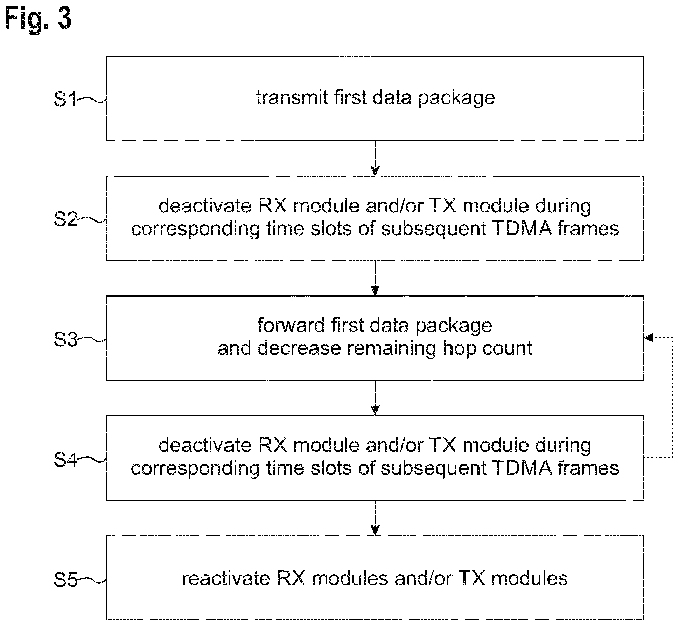

The wireless ad hoc network 10 is configured to perform a communication method that is described in the following with reference to Figure 3.

It is noted that the communication method is described hereinafter with respect to data packages transmitted and received by the first node 14, the second node 16, the third node 18, the fourth node 20, and the fifth node 22. It is to be understood that the communication method likewise applies to an arbitrary other number of nodes 12 as well as to an arbitrary other topology of the wireless ad hoc network 10.

A first data package is transmitted by means of the plurality of nodes 12, respectively, wherein the first data package is transmitted in a first TDMA frame of a cycle having a predetermined number of TDMA frames (step S1).

In fact, each node 12 may transmit the first data package to the respective 1-hop neighbors.

Therein, each node 12 transmits the first data package in a time slot being unambiguously assigned to the respective node 12.

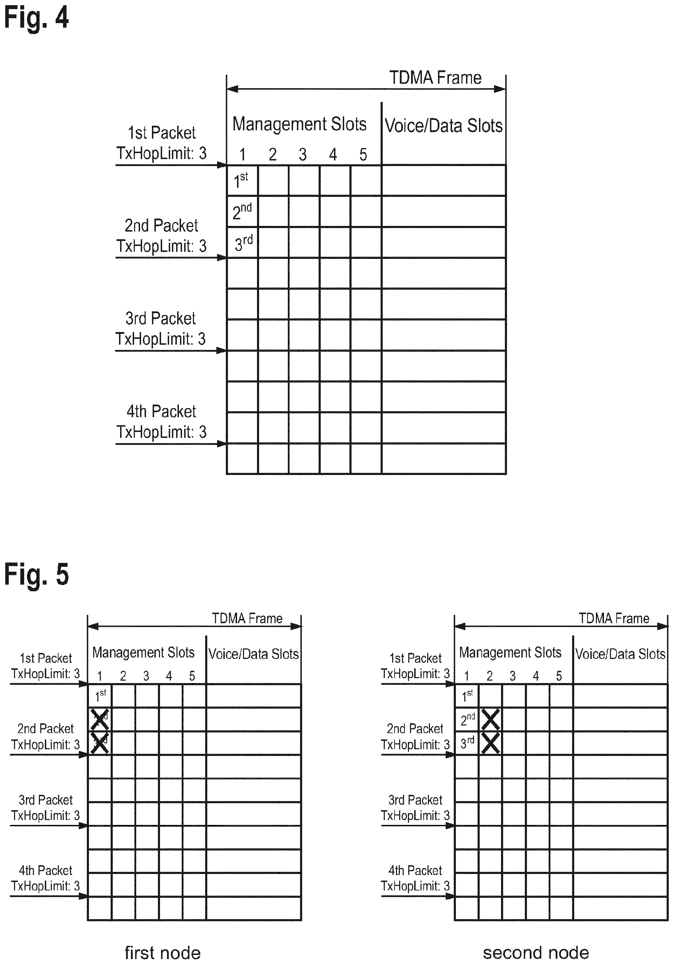

This is further illustrated in Figure 4, which shows TDMA frames that are used for transmitting the data packages between the nodes 12 of the wireless ad hoc network 10.

The time slots being unambiguously assigned to the nodes 12 are denoted as "Management Slots" in Figure 4.

The TDMA frames may further comprise data transmission time slots for transmitting payload data ("Voice/Data Slots" in Figure 4).

In general, the payload data may correspond to image data, video data, audio data, language data, and/or arbitrary other types of data.

In the example shown in Figure 4, the first time slot is assigned to the first node 14, such that all data packages associated with the first node 14 are transmitted during the first "Management Slot". Further, the second time slot is assigned to the second node 16, etc.

In fact, during the first time slot of the first TDMA frame ("1^{st}" in Figure 4), the first node 14 transmits at least one first data package to the second node 16 and to the third node 18, respectively.

During the second time slot of the first TDMA frame, the second node 16 may transmit at least one first data package to the first node 14 and to the fourth node 20, respectively. Particularly, the second node 16 may transmit at least one first data package to the third node 18 if the third node 18 is a 1-hop neighbor of the second node 16.

The third node 18, the fourth node 20, and the fifth node 22 likewise transmit the at least one first data package to their respective 1-hop neighbors during the respectively assigned time slot.

The nodes 12 each deactivate the RX module 32 and/or the TX module 36 during their respectively assigned time slot of subsequent TDMA frames (step S2).

Particularly, both the RX module 32 and the TX module 36 are deactivated. Without restriction of generality, this case is described in the following.

This is illustrated in Figure 5, which shows that the first node 14 has deactivated the RX module 32 and the TX module 36 during the first time slot of the second frame and during the first time slot of the third frame, respectively, as is indicated by the crossed-out time slots in Figure 5.

Likewise, the second node 16 has deactivated the RX module 32 and the TX module 36 during the second time slot of the second frame and during the second time slot of the third frame, respectively, etc.

The respectively received at least one first data package is forwarded by means of the nodes 12 (step S3).

For example, during the first time slot of the second TDMA frame ("2^{nd}" in Figure 3), the second node 16 and the third node 18 forward the at least one first data package received from the first node 14 to the fourth node 20, respectively.

In the exemplary topology of the wireless ad hoc network 10 shown in Figure 1, the first node 14 may not forward the at least one first data package received from the second node 16 and the at least one data package received from the this node 18 any further, as there are no nodes to forward the at least one first data package to.

If a node 12 has received at least one first data package from several nodes, respectively, the node 12 may transmit all first data packages received in the first TDMA frame during the second TDMA frame.

In the exemplary topology of the wireless ad hoc network 10 shown in Figure 1, this applies to the fourth node 20.

During the first TDMA frame, the fourth node 20 has received the at least one first data package from the second node 16 and from the third node 18, respectively.

Thus, the fourth node 20 may forward the at least one first data package received from the second node 16 to the fifth node 22 during the second time slot of the second TDMA frame. Further, the fourth node 20 may forward the at least one first data package received from the third node 18 to the fifth node 22 during the third time slot of the second TDMA frame.

The nodes 12 respectively deactivate the RX module 32 and/or the TX module 36 during the time slots used for forwarding the at least one first data package (step S4).

Particularly, both the RX module 32 and the TX module 36 are deactivated. Without restriction of generality, this case is described in the following.

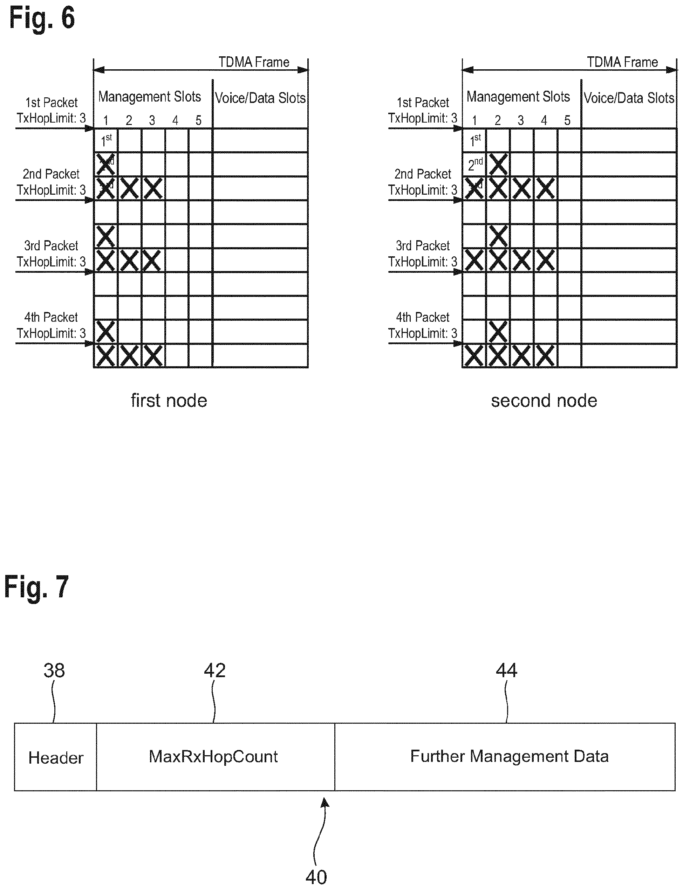

This is illustrated in Figure 6, which shows that the first node 14 has deactivated the RX module 32 and the TX module 36 during the second time slot of the third frame and during the third time slot of the third frame, respectively. This is done since the first node 14 does not have to forward the at least one first data package associated with the second node 16 and with the third node 18 anymore.

Likewise, the second node 16 (assuming that the second node has received the at least one data package form the first node 14, the third node 18, and the fourth node 20) has deactivated the RX module 32 and the TX module 36 during the first time slot of the third frame, during the third timeslot of the third frame, and during the fourth time slot of the third frame, respectively.

As is indicated by the dashed arrow in Figure 3, the steps of forwarding the at least one first data package and deactivating the RX modules 32 and/or the TX modules 36 are repeated for a predetermined number of TDMA frames, namely until the end of the first cycle of TDMA frames.

In the exemplary embodiment shown in Figures 1 and 4 to 6, each cycle comprises three TDMA frames, i.e. the data packages transmitted by the nodes 12 are allowed to hop a maximum number of three times. This may, of course, vary depending on the topology of the wireless ad hoc network 10.

In order to determine the number of frames for which the RX module 32 and/or the TX module 36 can be safely deactivated without missing any communication, the data packages transmitted by the nodes 12 may comprise additional information with respect to the remaining hop count of the respective data package.

Figure 7 schematically shows the structure of a data package.

The data package comprises a header 38, and a management data portion 40, wherein the management data portion 40 comprises a remaining hop count portion 42, and a further management data portion 42.

It is noted that the data package may comprise further portions comprising further information.

The header 38 may be configured as in usual wireless ad hoc networks. For example, the header 38 may comprise the address of a target node 12 for the respective data package.

The further management data portion 42 comprises further management data associated with the respective node 12, e.g. configuration information and/or location information associated with the respective node 12.

The remaining hop count portion 42 comprises information on a remaining hop count of the respective data package.

When the first node 14 transmits the at least one first data package, the value of the remaining hop count portion 42 is equal to the maximum allowable hops in the current configuration of the wireless ad hoc network 10. Accordingly, the remaining hop count portion 42 of the at least one first data package transmitted by the first node 14 comprises the information "remaining hop count = 3".

The value of the remaining hop count is decreased by one at each hop by means of the respective node 12.

Thus, the second node 16 reduces the value of the remaining hop count to two, i.e. the remaining hop count portion 42 of the at least one first data package associated with the first node 14 and forwarded by the second node 16 comprises the information "remaining hop count = 2".

If the remaining hop count reaches a predefined value, particularly zero, the respective package is not forwarded to any further nodes.

Each node 12 may deactivate the RX module 32 and/or the TX module 36 for a number of subsequent frames corresponding to the remaining hop count of the respective data package minus one, which corresponds to the remaining number of frames within the respective cycle.

After the number of frames has elapsed, the RX module 32 and/or the TX module are reactivated (step S5).

As is illustrated in Figure 6, the previously deactivated RX modules 32 and/or TX modules 36 are reactivated for the first TDMA frame of the second cycle of TDMA frames.

The steps S1 to S5 described above may then be repeated for further data packages transmitted by the nodes 12.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A communication method for a wireless ad hoc network (10), wherein the wireless ad hoc network (10) comprises a plurality of nodes (12), wherein the wireless ad hoc network (10) is a time-slotted barrage relay network, wherein each node (12) comprises an RX module (32) being configured to receive data packages based on time division multiple access (TDMA) frames, wherein each node (12) comprises a TX module (36) being configured to transmit data packages based on TDMA frames, and wherein the TDMA frames comprise time slots that are unambiguously assigned to one of the nodes (12), respectively, the communication method comprising the following steps:
- transmitting, by means of at least one node (12) of the plurality of nodes (12), at least one data package in a subset of time slots of a TDMA frame, respectively, wherein the subset of time slots is assigned to a subset of nodes (12) of the plurality of nodes (12); and
- deactivating, by means of the at least one node (12), the RX module (32) and/or the TX module (36) of the at least one node (12) during the subset of time slots of subsequent TDMA frames.

2. The communication method of claim 1, wherein management data is provided and processed in the time slots assigned to the subset of nodes (12), respectively, wherein the management data comprises a remaining hop count portion (42), wherein the remaining hop count portion (42) comprises information on a remaining hop count for the management data associated with the respective node (12), and wherein a value of the remaining hop count is decreased at each hop by means of the respective node (12).

3. The communication method of claim 2, wherein the RX module (32) and/or the TX module (36) are reactivated for the subset of time slots after a number of TDMA frames corresponding to the remaining hop count have elapsed.

4. The communication method according to any one of the preceding claims, wherein the subset of nodes (12) comprises the at least one node (12) and/or nodes (12) being arranged upstream of the at least one node (12).

5. The communication method according to any one of the preceding claims, wherein management data is provided and processed in the time slots assigned to the subset of nodes (12), respectively, wherein the management data comprises configuration information and/or location information associated with the respective node (12).

6. The communication method according to any one of the preceding claims, wherein the at least one node (12) transmits data packages received from different other nodes (12) during a single TDMA frame in the subsequent TDMA frame.

7. The communication method according to any one of the preceding claims, wherein the TDMA frames comprise data transmission time slots for transmitting payload data, respectively.

8. The communication method of claim 7, wherein the payload data corresponds to image data, video data, audio data, and/or language data.

9. A wireless ad hoc network, wherein the wireless ad hoc network (10) comprises a plurality of nodes (12), wherein the wireless ad hoc network (10) is a time-slotted barrage relay network, wherein each node (12) comprises an RX module (32) being configured to receive data packages based on time division multiple access (TDMA) frames, wherein each node comprises a TX module (36) being configured to transmit data packages based on TDMA frames, wherein the TDMA frames comprise time slots that are unambiguously assigned to one of the nodes (12), respectively, and wherein the wireless ad hoc network (10) is configured to perform the communication method according to any one of the preceding claims.
